(19)

Europäisches
Patentamt
European
Patent Office
Office européen
des brevets

(11) **EP 4 654 466 A1**

(12) **EUROPEAN PATENT APPLICATION**

published in accordance with Art. 153(4) EPC

(43) Date of publication:
**26.11.2025 Bulletin 2025/48**

(21) Application number: **24744946.5**

(22) Date of filing: **22.01.2024**

(51) International Patent Classification (IPC):
***H02S 50/00*** (2014.01)

(52) Cooperative Patent Classification (CPC):
**H02S 50/00**

(86) International application number:
**PCT/KR2024/001029**

(87) International publication number:
**WO 2024/155167 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.01.2023 KR 20230008724**

(71) Applicant: **Hanwha Solutions Corporation**
**Jung-gu**
**Seoul 04541 (KR)**

(72) Inventors:
• **NOH, Hong Il**
**Seoul 04541 (KR)**

• **KIM, Hyun Gon**
**Seoul 04541 (KR)**
• **HONG, Dahyun**
**Seoul 04541 (KR)**
• **PARK, Dong-il**
**Seoul 04541 (KR)**
• **YUN, Ju Hwan**
**Seoul 04541 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **INVERTER AND MAIN CONTROLLER OF PHOTOVOLTAIC SYSTEM, AND PHOTOVOLTAIC METHOD**

(57)    According to an embodiment of the present disclosure, there is provided a photovoltaic power generation method including an operation of setting a first maximum waiting time and transmitting a registration start signal and the first maximum waiting time to one or more module level power electronics (MLPEs), an operation of receiving unique information from a first MLPE among the one or more MLPEs, an operation of assigning a first sequence ID to the unique information of the first MLPE, and an operation of setting a second maximum waiting time and transmitting the registration start signal and the second maximum waiting time to the one or more MLPEs.

FIG. 3

EP 4 654 466 A1

## Description

## Technical Field

The present disclosure relates to an inverter and a primary of a photovoltaic power generation system, and a photovoltaic power generation method.

## Background Art

In general, photovoltaic power generation systems are systems that convert solar energy into electrical energy by using photovoltaic cells and transmit the electrical energy to a commercial power grid. In such a process, environmental pollution does not occur, and the photovoltaic power generation system may be used semipermanently.

Such a solar power system includes a plurality of solar panels, a plurality of module level power electronics (MLPEs), a primary, and a server.

The plurality of solar panels may be connected to each other through at least one of series and parallel manners, and the plurality of MLPEs may be respectively provided on the plurality of solar panels.

Here, the MLPEs are installed on the plurality of solar panels, optimize the power efficiency of the solar panels, and transmit power generation information including a power generation amount, a temperature, and failure information of the solar panels to the primary.

The primary controls the plurality of MLPEs, collects power generation information received from the plurality of MLPEs, and transmits the collected power generation information to the server.

The server monitors a power generation state of the plurality of solar panels by using power generation information from the plurality of solar panels.

Here, when the plurality of MLPEs randomly transmit power generation information to the primary, a communication collision problem may occur between the plurality of MLPEs, and there may be a problem in that it is difficult to secure communication periodicity.

## Disclosure of Invention

## Technical Problem

In order to solve the problems of a related art as described above, the present disclosure is directed to preventing a communication collision between a plurality of module level power electronics (MLPEs) and securing communication periodicity.

The present disclosure is also directed to shortening a registration time by automatically performing a sequence ID registration procedure of a plurality of MLPEs.

The present disclosure is also directed to preventing a registration time delay by reducing the maximum waiting time as the number of MLPEs for which a registration is completed increases.

The technical objects to be achieved in the present disclosure are not limited to the technical objects described above, and other technical objects which are not described may be clearly understood to those skilled in the art from the following description.

## Solution to Problem

According to an embodiment of the present disclosure, there is provided a photovoltaic power generation method including an operation of setting a first maximum waiting time and transmitting a registration start signal and the first maximum waiting time to one or more module level power electronics (MLPEs), an operation of receiving unique information from a first MLPE among the one or more MLPEs, an operation of assigning a first sequence ID to the unique information of the first MLPE, and an operation of setting a second maximum waiting time and transmitting the registration start signal and the second maximum waiting time to the one or more MLPEs.

In an embodiment, the operation of receiving the unique information from the first MLPE may include receiving the unique information transmitted at a unique information transmission time set based on a random time set within the first maximum waiting time.

In an embodiment, the random time may be set as a random timer provided in each of the one or more MLPEs is operated, and the random timer may stop the operation thereof when receiving the unique information from other MLPEs.

In an embodiment, the first maximum waiting time may be a time that is longer than the second maximum waiting time, and the first maximum waiting time may be determined based on the number of MLPEs to be registered.

In an embodiment, the first maximum waiting time may be a value obtained by multiplying a basic waiting time by the number of the MLPEs to be registered, and the second maximum waiting time may be a value obtained by subtracting the basic waiting time from the first maximum waiting time.

In an embodiment, the operation of assigning the first sequence ID to the unique information of the first MLPE may include assigning the first sequence ID to the first MLPE which has first transmitted the unique information among the one or more MLPEs.

In an embodiment, the operation of transmitting the registration start signal and the second maximum waiting time to the one or more MLPEs may include transmitting the registration start signal and the second maximum waiting time to remaining MLPEs excluding the first MLPE among the one or more MLPEs.

According to another embodiment of the present disclosure, there may be provided a primary of a photovoltaic power generation system including a communication unit configured to transmit a registration start signal and a maximum waiting time to M MLPEs and receive unique information from the M MLPEs, wherein M is a natural number greater than or equal to 2; and a processor configured to set the registration start signal and the maximum waiting time and assign a sequence ID indicating an order of information transmission and reception between the M MLPEs to the unique information of the M MLPEs in an order in which the unique information is received, wherein the unique information of the M MLPEs is transmitted at a unique information transmission time of each MLPE, and the unique information transmission time is based on a random time set within the maximum waiting time.

In an embodiment, the processor may be further configured to assign the sequence ID to the unique information of a first MLPE which has first transmitted the unique information among the M MLPEs.

In an embodiment, the first MLPE may be configured to transmit the unique information to remaining M-1 MLPEs excluding the first MLPE when transmitting the unique information to the primary.

In an embodiment, the M-1 MLPEs may be configured to stop an operation of a random timer when receiving the unique information from the first MLPE.

In an embodiment, when the sequence ID is assigned to the first MLPE, the processor may be further configured to retransmit the registration start signal and the maximum waiting time to the remaining M-1 MLPEs excluding the first MLPE.

In an embodiment, the processor may be further configured to set the maximum waiting time based on the number of the MLPEs.

In an embodiment, the processor may be further configured to reduce the maximum waiting time as the number of MLPEs assigned with the sequence ID increases.

According to another embodiment of the present disclosure, there is provided an inverter of a photovoltaic power generation system including a primary, wherein the primary includes a communication unit configured to transmit a registration start signal and a maximum waiting time to one or more MLPEs and receive unique information from the one or more MLPEs, and a processor configured to set a first maximum waiting time, determine to transmit the registration start signal and the first maximum waiting time to the one or more MLPEs, assign a first sequence ID to the unique information of a first MLPE among the one or more MLPEs, set a second maximum waiting time, determine to transmit the registration start signal and the second maximum waiting time to the one or more MLPEs, and assign a second sequence ID to the unique information of a second MLPE among the one or more MLPEs.

**Advantageous Effects of Invention**

According to the present disclosure, a sequence ID of a plurality of module level power electronics (MLPEs) may be registered, and power generation information of a solar panel may be transmitted to a primary according to a sequence thereof, thereby preventing a communication collision and securing communication periodicity.

In addition, according to the present disclosure, a registration time may be shortened by automatically performing a sequence ID registration procedure of a plurality of MLPEs.

In addition, according to the present disclosure, a maximum waiting time may be set according to the number of MLPEs to prevent random times of MLPEs from overlapping each other, thereby performing an effective registration procedure.

In addition, according to the present disclosure, as the number of MLPEs for which a registration is completed increases, a maximum waiting time may be reduced, thereby preventing a delay in registration time.

The effects obtainable in the present disclosure are not limited to the effects described above, and other effects that are not described will be clearly understood by a person skilled in the art from the description below.

**Brief Description of Drawings**

FIG. 1 is a drawing for describing an example of a photovoltaic power generation system according to an embodiment of the present disclosure.
FIG. 2 is a flowchart for describing an example of a method of automatically registering an module level power electronics (MLPE) of a photovoltaic power generation system.
FIG. 3 is a block diagram illustrating an example of processors included in an MLPE and a primary included in a photovoltaic power generation system according to an embodiment of the present disclosure.
FIG. 4 is a flowchart for describing an example of a solar MLPE registration method according to an embodiment of the present disclosure.

Mode for the Invention

Although terms used herein are selected from among general terms that are currently and widely used in consideration of functions in embodiments, these may be changed according to intentions or customs of those skilled in the art or the advent of new technology. In addition, in specific cases, terms intentionally selected by the applicant may be used, and in this case, the meaning of the terms will be disclosed in corresponding description of the present disclosure. Therefore, the terms used herein should be defined based on the overall content of the present disclosure instead of a simple name of each of the terms.

Throughout the specification, unless explicitly described to the contrary, the word "comprise" and variations such as "comprises" or "comprising" will be understood to imply the inclusion of stated elements but not the exclusion of any other elements.

In addition, terms "ordinal numbers" such as "first" and "second" may be used to describe various components, but the components should not be limited by the terms. The above terms are used only for distinguishing one constituent element from other constituent elements.

Hereinafter, embodiments will be described in detail with reference to the accompanying drawings. However, the embodiments may be implemented in various forms and are not limited to the examples described herein.

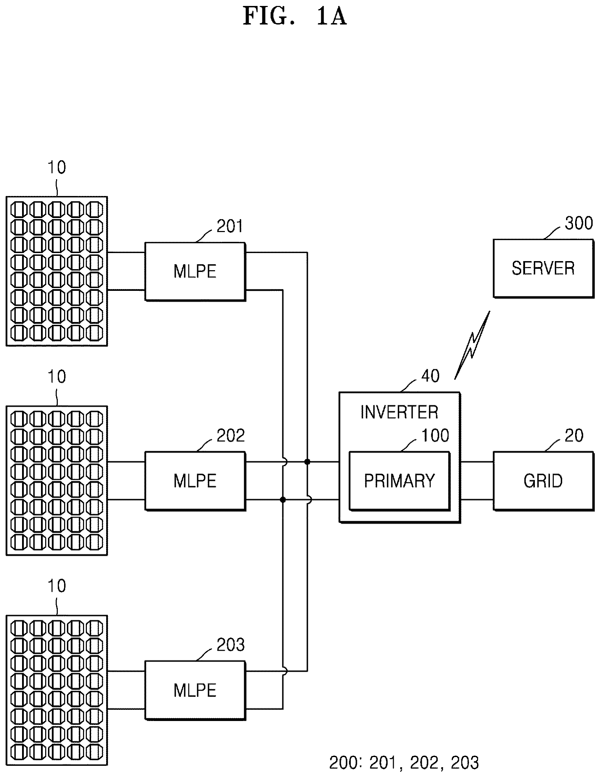

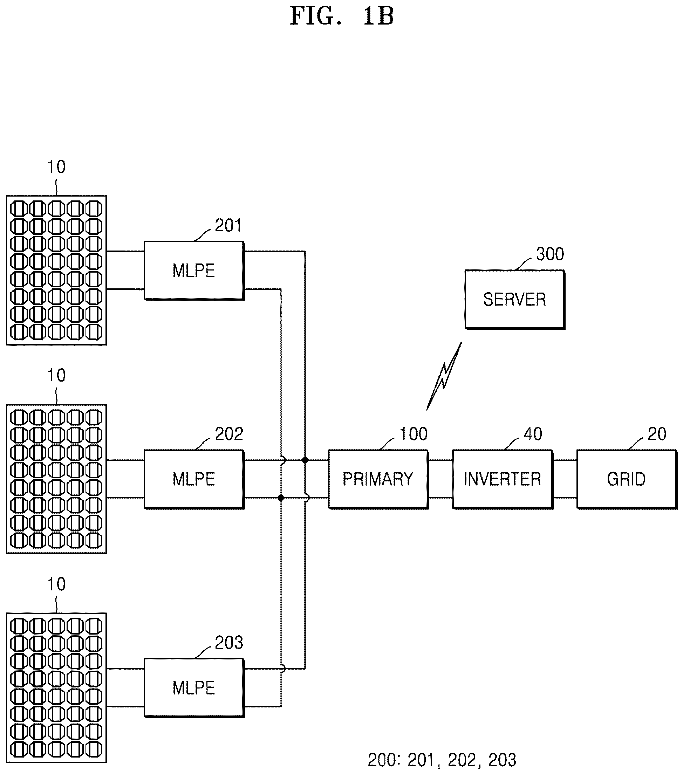

FIGS. 1A and 1B are drawings illustrating a photovoltaic power generation system according to an embodiment of the present disclosure.

As shown in FIG. 1A, the photovoltaic power generation system according to an embodiment of the present disclosure may include N solar panels 10, wherein N is a natural number greater than or equal to 2), a primary 100, M module level power electronics (MLPEs) 200, wherein M is a natural number greater than or equal to 2), and a server 300. Alternatively, as shown in FIG. 1B, the photovoltaic power generation system according to another embodiment of the present disclosure may include a plurality of solar panels 10, a primary 100, a plurality of MLPEs 200, an inverter 40, and a server 300.

That is, as shown in FIG. 1A, the photovoltaic power generation system according to an embodiment may include the primary 100 in the inverter 40. Alternatively, according to another embodiment, as shown in FIG. 1B, the photovoltaic power generation system may include the inverter 40 between the primary 100 and a grid 20. Here, the inverter 40 may convert direct current (AC) power generated by the plurality of solar panels 10 into alternating current (AC) power and may transmit the converted AC power to the grid 20.

Hereinafter, for convenience of description, a description will be provided based on an example in which the primary 100 is included in the inverter 40 as shown in FIG. 1A. In addition, hereinafter, the N solar panels 10 and the M MLPEs 200 are collectively described, but the solar panels 10 and MLPEs 200 may be separate from each other and may consist of different types or models.

According to an embodiment, each of the N solar panels 10 may refer to a photovoltaic power generation panel in a unit of a module. In addition, the N solar panels 10 may be connected to each other in at least one of series and parallel manners, and the M MLPEs 200 may each be provided on one of the N solar panels 10. Here, N and M may be the same or different. For example, one MLPE 200 may be connected to one solar panel 10, or one MLPE 200 may be connected to a plurality of solar panels 10.

In addition, according to an embodiment, the M MLPEs 200 may include a module-level inverter to convert power generated by each solar panel 10 into AC power.

In addition, according to an embodiment, the M MLPEs 200 may include a maximum power point tracking (MPPT) device such as an optimizer to optimize the efficiency of power generated by the solar panel 10. Specifically, the M MLPEs 200 may operate in a buck mode to lower an output voltage when the output voltage of the connected solar panels 10 is higher than a maximum power point and may operate in a boost mode to increase the output voltage when the output voltage is lower than the maximum power point, thereby optimizing power efficiency.

In addition, according to an embodiment, in an emergency situation, the M MLPEs 200 may perform an emergency shutdown (rapid shutdown) to stop the power generation of the solar panels 10. The M MLPEs 200 may transmit power generation information including a power generation amount, a temperature, and failure information of solar panels 10 to the primary 100 and may receive operation instructions for optimizing power efficiency from the primary 100.

Here, information transmission and reception between the M MLPEs 200 and the primary 100 may be performed by using a power line communication (PLC) method. When PLC is used, a separate communication cable or wireless communication technology for transmitting or receiving information between the M MLPEs 200 and the primary 100 does not need to be used, thereby facilitating the installation and maintenance of the photovoltaic power generation system. However, since PLC communication uses power lines, the PLC communication may be more affected by line conditions or the environments as compared to when communication cables are used.

In addition, according to an embodiment, the primary 100 may collect power generation information received from the M MLPEs 200 to transmit the power generation information to the server 300, and the server 300 may monitor a power generation state of the N solar panels 10 by using the power generation information of the N solar panels 10.

Here, information transmission and reception between the primary 100 and the server 300 may be performed in a wired or wireless manner.

The primary 100 may control the M MLPEs 200 according to a power generation state of the solar panel 10.

In order to monitor the power generation state of the plurality of solar panels 10, the primary 100 transmits instruction data to the M MLPEs 200, and the M MLPEs 200 transmit response data including power generation information of the solar panels 10 to the primary 100 in response to the instruction data. The primary 100 collects power generation information of the plurality of solar panels 10. The collected power generation information of the solar panel 10 may be transmitted to the server 300.

The M MLPEs 200 may transmit unique information thereof (for example, a serial number) as well as the power generation information such that the controller 100 may identify the MLPE 200 that has transmitted the power generation information.

Here, when the primary 100 randomly transmits instruction data to the M MLPEs 200 or when the M MLPEs 200 randomly transmit response data including power generation information and unique information to the primary 100, a communication collision problem may occur between the M MLPEs 200, and there may be a problem in that it is difficult to secure communication periodicity.

In this way, in order to solve the communication collision problem and secure communication periodicity, the primary 100 of the photovoltaic power generation system according to an embodiment of the present disclosure performs a procedure (hereinafter referred to as a registration procedure) of assigning a sequence ID indicating the order of information transmission and reception between the M MLPEs 200. In this case, the sequence ID may be an address to which unique information of the M MLPEs 200 is assigned. According to an embodiment, the primary 100 may assign a sequence ID to unique information of the M MLPEs 200, for which a registration procedure has been completed, to store registration information, and may transmit the stored registration information to the server 300.

Accordingly, the M MLPEs 200 may transmit power generation information of the solar panels 10 to the primary 100 according to the sequence ID thereof, thereby preventing a communication collision and secure communication periodicity.

A procedure of registering the sequence ID of the M MLPEs 200 may be performed when the M MLPEs 200 are initially installed or the MLPE 200, in which an error has occurred among the M MLPEs 200, is replaced.

An installer may visit the site to manually perform the procedure of registering the sequence ID of the M MLPEs 200. However, since the MLPE 200 is powered on only during the daytime due to the characteristics thereof during a manual registration, there is a difficulty in that a registration process should be completed from morning until sunset.

In order to solve the above-described problem, in the photovoltaic power generation system according to an embodiment, instead of having an installer manually perform a registration procedure, the procedure of registering the sequence ID of the M MLPEs 200 may be automatically performed, thereby shortening a registration time. Hereinafter, a method of automatically performing a registration procedure according to an embodiment will be described.

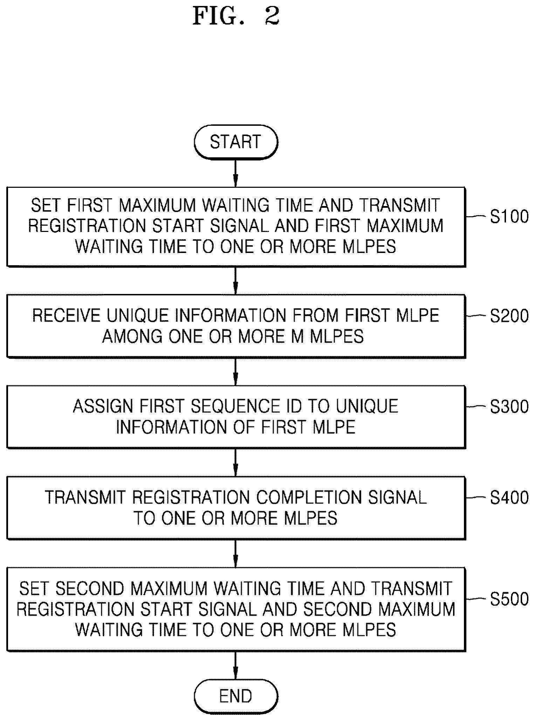

FIG. 2 is a flowchart for describing an example of a method of automatically registering an MLPE of a photovoltaic power generation system.

Referring to FIG. 2, first, a primary 100 may set a first maximum waiting time and may transmit a registration start signal and the first maximum waiting time to M MLPEs 200 (S100). In this case, the registration start signal may be transmitted to the M MLPEs 200 requiring a registration as a signal for starting a registration procedure of assigning a sequence ID. In addition, the maximum waiting time may be a time required to collect unique information to register the M MLPEs 200. In addition, the first maximum waiting time may be a maximum waiting time that is initially set.

Next, the primary 100 may receive unique information from a first MLPE among the M MLPEs 200 (S200). In this case, the first MLPE may be any MLPE that first transmits unique information to the primary 100.

According to an embodiment, the M MLPEs 200 may receive the registration start signal and the maximum waiting time to set a random time within the maximum waiting time. In this case, the random time may be set by a random timer, and a unique information transmission time at which the M MLPEs 200 transmits unique information thereof to the primary 100 may be determined based on the random time. That is, according to an embodiment, the M MLPEs 200 may operate the random timer for the random time and may transmit the unique information thereof to the primary 100 at the unique information transmission time when the random time has elapsed.

Next, the primary 100 may assign a first sequence ID to the unique information of the first MLPE (S300). In this way, a sequence ID may be assigned to the M MLPEs 200 in the order in which the primary 100 receives unique information. That is, the primary 100 may assign the first sequence ID (first address) to the MLPE 200 in which unique information is first received among the M MLPEs 200.

For example, when the unique information transmission time based on the random time set by a first MLPE 201 is 10 seconds, the unique information transmission time based on the random time set by a second MLPE 202 is 15 seconds, and the unique information transmission time based on the random time set by the third MLPE 203 is 20 seconds, the first MLPE 201 may transmit unique information to the primary 100 at a time point at which 10 seconds have elapsed. Accordingly, the primary 100 may assign ID 1 to the first MLPE 201.

According to an embodiment, when transmitting unique information to the primary 100, the M MLPEs 200 may transmit the unique information to other MLPEs 200. When other MLPEs 200 transmit unique information to the primary 100 before the random time of the M MLPEs 200 elapses, the M MLPEs 200 may stop the operation of the random timer.

For example, when the first MLPE 201 transmits unique information to the primary 100, the first MLPE 201 may also transmit the unique information to the second MLPE 202 and the third MLPE 202, thereby causing the second MLPE 202 and the third MLPE 202 to stop the operation of the random timer thereof.

Next, the primary 100 may transmit a registration signal of the first sequence ID to the M MLPEs 200 (S400). In an embodiment, the registration signal of the first address may be transmitted to the remaining (M-1) MLPEs excluding the first MLPE 201. In addition, the first MLPE 201 that has received the registration signal of the first address may transmit a registration completion signal to the remaining M-1 MLPEs and the primary 100.

Next, the primary 100 may set a second maximum waiting time and may transmit a registration start signal and the second maximum waiting time to the M MLPEs 200 (S500). In addition, the primary 100 may receive unique information from the second MLPE 202 to assign the received unique information to a second address. In this way, the primary 100 may perform a registration procedure on the remaining MLPEs in which an address, that is, a sequence ID, is not assigned to unique information.

According to an embodiment, whenever an allocation of a sequence ID to the MLPE 200 is completed, the primary 100 may transmit a registration start time and a maximum waiting time to the MLPEs 200 which are not assigned with a sequence ID. Thereafter, the above-described registration procedure is repeatedly performed on all the MLPEs 200 that have not been assigned with a sequence ID until the registration procedure is completed

In the above example, when the primary 100 transmits the registration start signal and the second maximum waiting time to the second MLPE 202 and the third MLPE 203, the second MLPE 202 sets the unique information transmission time based on the random time to 5 seconds, and the third MLPE 203 sets the unique information transmission time based on the random time to 10 seconds, the second MLPE 202 may transmit unique information to the primary 100 at a time point at which 5 seconds have elapsed. Accordingly, the primary 100 may assign a second address (ID 2) to the second MLPE 202.

Thereafter, when the primary 100 transmits a registration start signal and a third maximum waiting time to the third MLPE 203, and the third MLPE 203 sets the unique information transmission time based on the random time to 5 seconds, the third MLPE 203 may transmit unique information to the primary 100 at a time point at which 5 seconds have elapsed. Accordingly, the primary 100 may assign a third address (ID 3) to the third MLPE 203.

According to an embodiment, the primary 100 may determine a maximum waiting time based on the number of MLPEs 200 to be registered. In this regard, when the maximum waiting time is set too short as compared to the number of MLPEs 200, there is a high possibility that random times set by the MLPEs 200 within the maximum waiting time overlap each other.

Accordingly, according to an embodiment, the primary 100 may set a maximum waiting time according to the number of MLPEs 200. Here, as the number of MLPEs 200 increases, the maximum waiting time may be set longer such that the random times set by the MLPEs 200 do not overlap each other. More specifically, the primary 100 may set a value, which is obtained by multiplying a preset basic waiting time by the number of MLPEs 200 to be registered (or the number of MLPEs 200 in which a sequence ID has not yet been assigned to unique information), as the maximum waiting time. In this case, the basic waiting time may be a registration waiting time set when only one MLPE 200 is present.

According to an embodiment, even when the maximum waiting time is set such that the random times set by the MLPEs 200 do not overlap each other, when the random times set by two or more MLPEs 200 are the same, a communication collision may occur. In this case, the primary 100 may not recognize unique information transmitted simultaneously by the MLPEs 200 and may perform a next registration procedure. That is, when a communication collision occurs due to unique information being received simultaneously from two or more MLPEs 200 in operation S200, the primary 100 does not register any MLPEs and returns to operation S100 to retransmit a registration start signal and a maximum waiting time to each MLPE 200.

Meanwhile, as a registration procedure progresses, the number of MLPEs 200 to be registered decreases. In this case, when the registration procedure continues for an initially set maximum waiting time, there occurs a problem in that a registration time is delayed. For example, when it is assumed that 20 MLPEs 200 are to be registered, and a maximum waiting time is set to 10 seconds, since random times of 20 MLPEs 200 should not overlap each other when the MLPE 200 is initially registered, 10 seconds are required, but when 18 MLPEs 200 are registered and two MLPEs 200 remain, or even when one MLPE 200 remains, since a maximum waiting time is 10 seconds, a registration procedure is delayed by 10 seconds in the worst case.

In order to solve such a problem, according to an embodiment, the primary 100 may set an $(n+1)^{th}$ maximum waiting time to be shorter than an $n^{th}$ maximum waiting time. That is, the primary 100 may shorten a maximum waiting time as the number of MLPEs 200 assigned with a sequence ID increases.

A maximum waiting time Tm' may be calculated according to Equation 1 below.

## Equation 1

$$Tm' = Tm-(Tu \times (Et-Es))$$

Here, Tm is an initially set maximum waiting time, Et is a total number of MLPEs 200 to be registered, Tu is a value obtained by dividing Tm by Et, and Es is the number of MLPEs 200 remaining without being registered.

For example, assuming that the total number Et of MLPEs 200 to be registered is 50 and the initially set maximum waiting time Tm is 20 seconds, when the number Es of MLPEs 200 remaining without being registered is 10, the maximum waiting time Tm' may be 4 seconds according to Equation 1 above.

In a further embodiment, the $(n+1)^{th}$ maximum waiting time may be a value obtained by subtracting a base waiting time from the $n^{th}$ maximum waiting time. For example, the first maximum waiting time may be a value obtained by multiplying the number of MLPEs 200 to be registered by the basic waiting time, and the second maximum waiting time may be a value obtained by subtracting the basic waiting time from the first maximum waiting time.

In a further embodiment, the primary 100 may automatically initiate a registration procedure when an abnormal state occurs. That is, the primary 100 may receive monitoring information about a solar panel 10 from the MLPE 200 according to a set sequence ID, but such monitoring information may not be received when an abnormal state such as a power generation shutdown of the solar panel 10 or a communication abnormality of the MLPE 200 occurs. Therefore, when an abnormal situation occurs, the primary 100 may initiate a sequence ID re-registration procedure on the remaining MLPEs 200 excluding the MLPE 200 in which an abnormality has occurred.

In a further embodiment, when unique information is not received until a maximum waiting time has elapsed even though the LLPEs 200 are present, the primary 100 may determine that an abnormality has occurred in the remaining MLPEs 200 to be registered. In the above-described example, when, after the registration of the first MLPE 201 and the second MLPE 200 is completed, the third maximum waiting time is transmitted to the third MLPE 200, but unique information of the third MLPE 300 is not received until the third maximum waiting time has elapsed, the primary 100 may determine that an abnormality has occurred in the third MLPE 300.

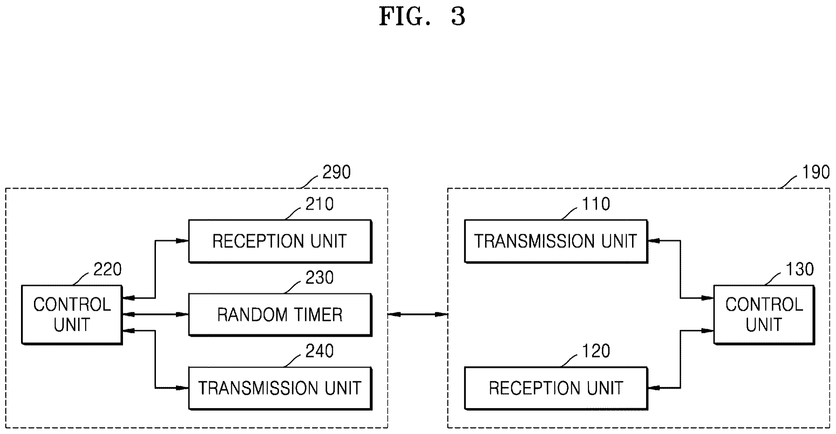

FIG. 3 is a block diagram illustrating an example of processors included in an MLPE and a primary included in a photovoltaic power generation system according to an embodiment of the present disclosure.

As described above, a primary 100 and an MLPE 200 included in the photovoltaic power generation system according to an embodiment of the present disclosure may each be implemented as an MLPE registration device. In addition, the primary 100 and the MLPE 200 may respectively include processors 190 and 290, and the processors 190 and 290 of the primary 100 and the MLPE 200 may perform an MLPE registration procedure.

As shown in FIG. 3, the processor 190 of the primary 100 may include a transmission unit 110, a reception unit 120, and a control unit 130. In addition, the processor 290 of the MLPE 200 may include a reception unit 210, a control unit 220, a random timer 230, and a transmission unit 240. However, the above-described units are merely functional components for describing the operations of the processors 190 and 290, and the operation of the present disclosure is not limited by the division of each of the units.

According to an embodiment, the processors 190 and 290 may perform at least some of data analyzing, processing, and result information generating for performing the above-described operations by using at least one of a machine learning, a neural network, and a deep learning algorithm as a rule-based or artificial intelligence algorithm. Examples of a neural network may include models such as a convolutional neural network (CNN), a deep neural network (DNN), and a recurrent neural network (RNN).

For example, the processors 190 and 290 may be implemented as an array of a plurality of logic gates or may also be implemented as a combination of a general-purpose microprocessor and a memory storing a program that may be executed on a microprocessor. For example, the processors 190 and 290 may each include a general-purpose processor, a central processing unit (CPU), a microprocessor, a digital signal processor (DSP), a controller, a microcontroller, a state machine, or the like. In some environments, the processor 190 and 290 may include an application-specific semiconductor (ASIC), a programmable logic device (PLD), a field programmable gate array (FPGA), or the like. For example, the processors 190 and 290 may refer to a combination of processing devices such as a combination of a DSP and a microprocessor, a combination of a plurality of microprocessors, a combination of one or more microprocessors in conjunction with a DSP core, or a combination of any other such configurations.

More specifically, the transmission unit 110 of the processor 190 of the primary 100 may transmit a registration start signal and a maximum waiting time to the reception unit 210 of M MLPEs 200.

When a random time set within the maximum waiting time in the MLPE 200 has elapsed, the reception unit 120 may receive unique information from the transmission unit 240 of the MLPE 200.

The control unit 130 may assign a sequence ID to the M MLPEs 200 in the order in which unique information is received. That is, the control unit 130 may assign a sequence ID to a first MLPE 201 in which unique information is first received among the M MLPEs 200.

When the sequence ID is assigned to the first MLPE 200, the control unit 130 may transmit a registration start time and a maximum waiting time to the transmission units 240 of the remaining M-1 MLPEs 200 excluding the first MLPE 200. Thereafter, the above-described registration procedure is repeatedly performed on all the M-1 MLPEs 200 that have not been assigned with a sequence ID until the registration procedure is completed.

The control unit 130 may set a maximum waiting time according to the number of MLPEs 200. Here, the maximum waiting time may be determined based on the number of MLPEs 200 to be registered such that random times set by the MLPEs 200 do not overlap each other, and the maximum waiting time may be set longer as the number of MLPEs 200 to be registered increases.

In addition, the control unit 130 may shorten a maximum waiting time as the number of MLPEs 200 assigned with a sequence ID increases.

In addition, as shown in FIG. 3, the processor 290 of each of the M MLPEs 200 may include the reception unit 210, the control unit 220, the random timer 230, and the transmission unit 240.

The reception unit 210 may receive a registration start signal and a maximum waiting time from the transmission unit 110 of the primary 100.

The control unit 220 may set a random time within the maximum waiting time and may control the operation of the random timer 230. The random timer 230 may operate for the set random time.

when the random timer 230 operates, and then the random time has elapsed, the transmission unit 240 may transmit unique information to the reception unit 120 of the primary 100.

Here, the sequence ID may be assigned to the M MLPEs by the control unit 130 of the primary 100 in the order in which unique information is transmitted.

The transmission unit 240 may transmit unique information to other MLPEs 200 when transmitting unique information to the reception unit 120 of the primary 100. When other MLPEs 200 transmit unique information to the reception unit 120 of the primary 100 before a unique information transmission time based on the random time elapses, the control unit 220 may stop the operation of the random timer 230.

The reception unit 210 may receive a registration start time and a maximum waiting time from the transmission unit 110 of the primary 100 whenever a sequence ID is assigned to the MLPE 200. Thereafter, the above-described registration procedure may be repeatedly performed on all the MLPEs 200 that have not been assigned with a sequence ID until the registration procedure is completed.

Here, the maximum waiting time may be set according to the number of MLPEs 200. That is, as the number of MLPEs 200 increases, the maximum waiting time may be set longer such that the random times set by the MLPEs 200 do not overlap each other.

In addition, the maximum waiting time may be reduced as the number of MLPEs 200 assigned with a sequence ID increases.

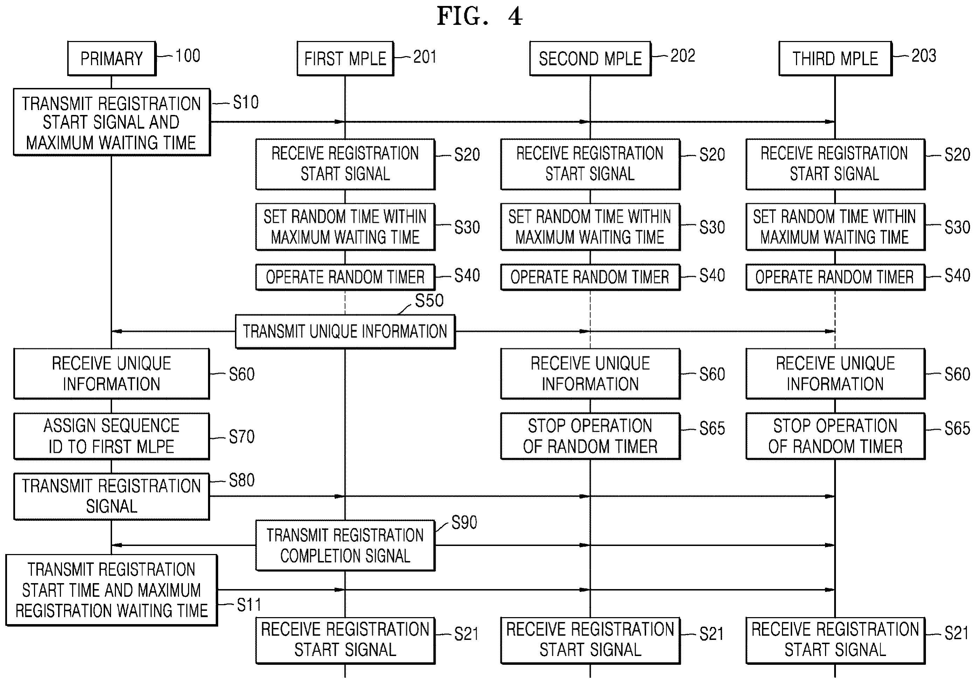

FIG. 4 is a flowchart for describing an example of a solar MLPE registration method according to an embodiment of the present disclosure.

Hereinafter, the solar MLPE registration method according to an embodiment of the present disclosure will be described with reference to FIG. 4.

The solar MLPE registration method according to an embodiment of the present disclosure may be a method of registering a sequence ID indicating the order of information transmission and reception between M MLPEs 200 provided on N solar panels 10. First, a primary 100 may transmit a registration start signal and a maximum waiting time to the M MLPEs 201, 202, and 203 (S10). Although only a first MLPE 201, a second MLPE 202, and a third MLPE 203 are illustrated in FIG. 4 as being included in the M MLPEs 200, one or more embodiments are not limited thereto, and there may be two or more MLPEs 200 or more MLPEs 200.

In this case, the primary 100 may set the maximum waiting time according to the number of MLPEs 200. Here, as the number of MLPEs 200 increases, the maximum waiting time may be set longer such that the random times set by the MLPEs 200 do not overlap each other. Thus, a communication collision problem may be solved.

Next, the first to third MLPEs 201, 202, 203 may receive the registration start signal and the maximum waiting time (S20) and may set a random time within the maximum waiting time (S30).

Next, the first to third MLPEs 201, 202, and 203 may operate a random timer 230 for the set random time (S40).

Next, among the first to third MLPEs 201, 202, and 203, the first MLPE 201 in which the random time has elapsed first may transmit unique information thereof to the primary 100 (S50).

In this case, when the first MLPE 201 transmits the unique information to the primary 100, the first MLPE 201 may transmit the unique information to other second and third MLPEs 202 and 203.

Accordingly, the primary 100 and the second and third MLPEs 202 and 203 may receive the unique information of the first MLPE 201 (S60).

Next, the second and the third MLPEs 202 and 203 may stop the operations of the random timers 230 thereof by confirming that another first MLPE 201 has transmitted the unique information to the primary 100 before the random time thereof elapses (S65).

Meanwhile, according to another embodiment, operations S50 and S60 of the embodiment of FIG. 4 may be omitted, and operation S65 of stopping the operation of the random timer may be performed after operation S90. This is to resolve a situation in which, even when a random timer is used, a communication collision occurs when a plurality of MLPEs simultaneously transmit unique information. That is, each MLPE does not transmit unique information thereof to other MLPEs, but instead, when a registration is completed, may transmit a registration completion signal to other MLPEs 200, and other MLPEs 200 may stop the operation of the random timer when receiving the registration completion signal.

Subsequently, the primary 100 may assign a sequence ID to the first MLPE 201 that has transmitted the unique information (S70).

Next, when the assignment of the sequence ID to the first MLPE 201 is completed, the primary 100 may transmit a registration signal to the first to third MLPEs 201, 202, and 203 (S80).

Next, the first MLPE 201 may transmit a registration completion signal to the primary 100 and the second and third MLPEs 202 and 203 (S90). As described above, the second and third MLPEs 202 and 203 that have received the registration completion signal may stop the operation of the random timer.

Next, in order to assign a sequence ID to the second and third MLPEs 202 and 203, the primary 100 may transmit a registration start time and a second maximum waiting time to the first to third MLPEs 201, 202, and 203 (S11). In this case, the primary 100 may reduce a maximum waiting time as the number of MLPEs 200 assigned with a sequence ID increases. Thus, a problem in that a registration time is delayed may be solved.

Next, the first to third MLPEs 201, 202, and 203 may receive the registration start time and the maximum waiting time (S21).

In this case, since the registration is completed, even when the registration start signal and the maximum waiting time are received, the first MLPE 201 does not set a random time. Meanwhile, in another example, in order to avoid redundant communication, the registration start time and the second maximum waiting time may be transmitted only to unregistered MLPEs, that is, the second and third MLPEs 202 and 203.

Thereafter, the above-described registration procedure is repeatedly performed on the second and third MLPEs 202 and 203 that have not been assigned with a sequence ID until the registration procedure is completed.

According to the MLPE registration method according to an embodiment of the present disclosure described above, a registration time may be shortened by automatically performing a sequence ID registration procedure on the M MLPEs 200.

Meanwhile, the above-described method may be recorded as a program that may be executed on a computer and may be implemented in a general-purpose digital computer operating the program using a computer-readable recording medium. In addition, the structure of the data used in the method described above may be recorded on a computer-readable recording medium through various means. Examples of the computer-readable recording medium include storage media such as magnetic storage media (e.g., real-only memory (ROMs), floppy disks, hard disks, and the like), and optical read media (e.g., compact disc read-only memories (ROMs) and digital videodisks (DVDs)).

It will be understood by those skilled in the art to which the present embodiment pertains that the present disclosure may be implemented in modified forms without departing from the spirit and scope of the present disclosure. Therefore, the disclosed methods are should be considered in an illustrative aspect rather than a restrictive aspect. The scope of the present disclosure should be defined by the claims rather than the above-mentioned description, and equivalents to the claims should be interpreted to fall within the present disclosure.

## List of Reference Numerals for Major Elements

    100: primary
    200: MLPE
    300: server

## Claims

1. A photovoltaic power generation method comprising:

       an operation of setting a first maximum waiting time and transmitting a registration start signal and the first maximum waiting time to one or more module level power electronics (MLPEs);
       an operation of receiving unique information from a first MLPE among the one or more MLPEs;
       an operation of assigning a first sequence ID to the unique information of the first MLPE; and
       an operation of setting a second maximum waiting time and transmitting the registration start signal and the second maximum waiting time to the one or more MLPEs.

2. The photovoltaic power generation method of claim 1, wherein the operation of receiving the unique information from the first MLPE comprises receiving the unique information transmitted at a unique information transmission time set based on a random time set within the first maximum waiting time.

3. The photovoltaic power generation method of claim 2, wherein the

       random time is set as a random timer provided in each of the one or more MLPEs is operated, and the random timer stops the operation thereof when receiving the unique information from other MLPEs.

4. The photovoltaic power generation method of claim 1, wherein the

       first maximum waiting time is a time that is longer than the second maximum waiting time and the first maximum waiting time is determined based on the number of MLPEs to be registered.

5. The photovoltaic power generation method of claim 4, wherein the

first maximum waiting time is a value obtained by multiplying a basic waiting time by the number of the MLPEs to be registered, and
the second maximum waiting time is a value obtained by subtracting the basic waiting time from the first maximum waiting time.

6. The photovoltaic power generation method of claim 1, wherein the operation of assigning the first sequence ID to the unique information of the first MLPE comprises assigning the first sequence ID to the first MLPE which has first transmitted the unique information among the one or more MLPEs.

7. The photovoltaic power generation method of claim 1, wherein the operation of transmitting the registration start signal and the second maximum waiting time to the one or more MLPEs comprises transmitting the registration start signal and the second maximum waiting time to remaining MLPEs excluding the first MLPE among the one or more MLPEs.

8. A primary of a photovoltaic power generation system, comprising:

   a communication unit configured to transmit a registration start signal and a maximum waiting time to M module level power electronics (MLPEs) and receive unique information from the M MLPEs, wherein M is a natural number greater than or equal to 2; and
   a processor configured to set the registration start signal and the maximum waiting time and assign a sequence ID indicating an order of information transmission and reception between the M MLPEs to the unique information of the M MLPEs in an order in which the unique information is received,
   wherein the unique information of the M MLPEs is transmitted at a unique information transmission time of each MLPE, and
   the unique information transmission time is based on a random time set within the maximum waiting time.

9. The primary of claim 8, wherein the processor is further configured to assign the sequence ID to the unique information of a first MLPE which has first transmitted the unique information among the M MLPEs.

10. The primary of claim 9, wherein, excluding the first MLPE, remaining M-1 MLPEs are configured to stop an operation of a random timer when the unique information is received from the first MLPE.

11. The primary of claim 9, wherein, when the sequence ID is assigned to the first MLPE, the processor is further configured to retransmit the registration start signal and the maximum waiting time to remaining M-1 MLPEs excluding the first MLPE.

12. The primary of claim 8, wherein the processor is further configured to set the maximum waiting time based on the number of MLPEs to be registered.

13. The primary of claim 8, wherein the processor is further configured to reduce the maximum waiting time as the number of MLPEs assigned with the sequence ID increases.

14. An inverter of a photovoltaic power generation system, comprising

   a main controller,
   wherein the primary comprises:

      a communication unit configured to transmit a registration start signal and a maximum waiting time to one or more module level power electronics (MLPEs) and receive unique information from the one or more MLPEs; and
      a processor configured to set a first maximum waiting time,
      determine to transmit the registration start signal and the first maximum waiting time to the one or more MLPEs, assign a first sequence ID to the unique information of a first MLPE among the one or more MLPEs, set a second maximum waiting time,
      determine to transmit the registration start signal and the second maximum waiting time to the one or more MLPEs, and assign a second sequence ID to the unique information of a second MLPE among the one or more MLPEs.

15. The inverter of claim 14, wherein the unique information of the one or more MLPEs is unique information transmitted at a unique information transmission time set based on a random time set within the maximum waiting time.

16. The inverter of claim 15, wherein the random time is set as a

   random timer provided in each of the one or more MLPEs is operated, and
   the random timer is configured to stop the operation thereof when receiving the unique information from other MLPEs.

17. The inverter of claim 14, wherein the first maximum waiting time

is a time that is longer than the second maximum waiting time, and

the first maximum waiting time is determined based on the number of MLPEs to be registered.

18. The inverter of claim 17, wherein the first maximum waiting time

is a value obtained by multiplying a basic waiting time by the number of the MLPEs to be registered, and

the second maximum waiting time is a value obtained by subtracting the basic waiting time from the first maximum waiting time.

19. The inverter of claim 14, wherein the processor is further

configured to assign the first sequence ID to the unique information of the first MLPE,

wherein the processor is further to assign the first sequence ID to the first MLPE which has first transmitted the unique information among the one or more MLPEs.

20. The inverter of claim 14, wherein the processor is further

configured to transmit the registration start signal and the second maximum waiting time to the one or more MLPEs,

wherein the processor is further configured to transmit the registration start signal and the second maximum waiting time to remaining MLPEs excluding the first MLPE among the one or more MLPEs.

# FIG. 1A

200: 201, 202, 203

# FIG. 1B

200: 201, 202, 203

# FIG. 2

START

SET FIRST MAXIMUM WAITING TIME AND TRANSMIT REGISTRATION START SIGNAL AND FIRST MAXIMUM WAITING TIME TO ONE OR MORE MLPES — S100

RECEIVE UNIQUE INFORMATION FROM FIRST MLPE AMONG ONE OR MORE M MLPES — S200

ASSIGN FIRST SEQUENCE ID TO UNIQUE INFORMATION OF FIRST MLPE — S300

TRANSMIT REGISTRATION COMPLETION SIGNAL TO ONE OR MORE MLPES — S400

SET SECOND MAXIMUM WAITING TIME AND TRANSMIT REGISTRATION START SIGNAL AND SECOND MAXIMUM WAITING TIME TO ONE OR MORE MLPES — S500

END

# FIG. 3

# FIG. 4

EP 4 654 466 A1

## INTERNATIONAL SEARCH REPORT

| International application No. |
| --- |
| **PCT/KR2024/001029** |

### A. CLASSIFICATION OF SUBJECT MATTER

**H02S 50/00**(2014.01)i

According to International Patent Classification (IPC) or to both national classification and IPC

### B. FIELDS SEARCHED

Minimum documentation searched (classification system followed by classification symbols)

H02S 50/00(2014.01); H01L 31/042(2006.01); H02S 40/22(2014.01); H02S 40/30(2014.01); H02S 50/10(2014.01); H04B 17/309(2015.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 태양광(solar), 인버터(inverter), 할당(allocation), 고유(unique), MLPE(multi level power electronics)

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2436116 B1 (G. GURU CO., LTD.) 25 August 2022 (2022-08-25)<br>See paragraphs [0060]-[0063] and figure 4. | 1-20 |
| A | KR 10-2022-0009118 A (CHUNGBUK NATIONAL UNIVERSITY INDUSTRY-ACADEMIC COOPERATION FOUNDATION) 24 January 2022 (2022-01-24)<br>See paragraphs [0054]-[0056] and figure 1. | 1-20 |
| A | KR 10-2022-0134358 A (LG INNOTEK CO., LTD.) 05 October 2022 (2022-10-05)<br>See claims 1-14 and figures 1-24. | 1-20 |
| A | JP 2012-138555 A (ASNEW SYSTEMS INC.) 19 July 2012 (2012-07-19)<br>See entire document. | 1-20 |
| A | US 2020-0235699 A1 (ENPHASE ENERGY, INC.) 23 July 2020 (2020-07-23)<br>See entire document. | 1-20 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **22 April 2024** | **22 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" align="center">**INTERNATIONAL SEARCH REPORT**<br>**Information on patent family members**</td><td colspan="2">International application No.<br><br>**PCT/KR2024/001029**</td></tr>
</table>

| Patent document<br>cited in search report | Publication date<br>(day/month/year) | Patent family member(s) | Publication date<br>(day/month/year) |
|---|---|---|---|
| KR 10-2436116 B1 | 25 August 2022 | None | |
| KR 10-2022-0009118 A | 24 January 2022 | KR 10-2396454 B1 | 09 May 2022 |
| KR 10-2022-0134358 A | 05 October 2022 | CN 117223207 A | 12 December 2023 |
| | | EP 4318910 A1 | 07 February 2024 |
| | | US 2024-0056022 A1 | 15 February 2024 |
| | | WO 2022-203474 A1 | 29 September 2022 |
| JP 2012-138555 A | 19 July 2012 | None | |
| US 2020-0235699 A1 | 23 July 2020 | AU 2016-336431 A1 | 01 February 2018 |
| | | AU 2016-336431 B2 | 14 October 2021 |
| | | AU 2021-257962 A1 | 25 November 2021 |
| | | AU 2021-257962 B2 | 03 November 2022 |
| | | AU 2022-259780 A1 | 01 December 2022 |
| | | AU 2022-259780 B2 | 01 June 2023 |
| | | EP 3360246 A1 | 15 August 2018 |
| | | EP 3360246 A4 | 15 August 2018 |
| | | US 10003300 B2 | 19 June 2018 |
| | | US 10615742 B2 | 07 April 2020 |
| | | US 11095249 B2 | 17 August 2021 |
| | | US 2017-0104447 A1 | 13 April 2017 |
| | | US 2018-0294772 A1 | 11 October 2018 |
| | | WO 2017-062574 A1 | 13 April 2017 |

Form PCT/ISA/210 (patent family annex) (July 2022)